**Europäisches Patentamt**

**European Patent Office**

**Office européen des brevets**

(19)

(11) Veröffentlichungsnummer: **0 288 730 B1**

# EUROPÄISCHE PATENTSCHRIFT

(12)

(45) Veröffentlichungstag der Patentschrift:
10.10.90

(21) Anmeldenummer: 88104431.7

(22) Anmeldetag: 19.03.88

(51) Int. Cl.⁵: **B65G 35/06, B65G 1/04,
B61B 10/02**

(54) Vorrichtung zum Fördern und Speichern von Gegenständen.

(30) Priorität: 01.04.87 DE 3710247

(43) Veröffentlichungstag der Anmeldung:
02.11.88 Patentblatt 88/44

(45) Bekanntmachung des Hinweises auf die Patenterteilung:
10.10.90 Patentblatt 90/41

(84) Benannte Vertragsstaaten:
FR IT LU

(56) Entgegenhaltungen:
CH-A- 619 189
DE-A- 3 513 535
DE-C- 2 609 371

(73) Patentinhaber: PSB GMBH FÖRDERANLAGEN UND
LAGERTECHNIK, Blocksbergstrasse 145,
D-6780 Pirmasens(DE)

(72) Erfinder: Kuwertz, Erich, Neuhof 12,
D-6751 Trippstadt(DE)
Erfinder: Schäfer, Herbert, Dipl.-Ing., Hauptstrasse 34,
D-6788 Vinningen(DE)

(74) Vertreter: Patentanwälte Dipl.-Ing. F.W. Möll Dipl.-Ing.
H.Ch. Bitterich, Langstrasse 5 Postfach 2080,
D-6740 Landau/Pfalz(DE)

**Beschreibung**

Die Erfindung betrifft eine Vorrichtung zum Fördern und Speichern von Gegenständen auf Förderstrecken und quer dazu verlaufenden Speicherstrecken gemäß dem Oberbegriff des Patentanspruchs 1.

Eine derartige Vorrichtung ist beispielsweise bekannt aus der DE-A-35 13 535. Diese bekannte Anlage ist realisiert als Elektrohängebahn, wobei den elektrisch angetriebenen Motorfahrzeugen die elektrische Energie sowie die Steuersignale durch in der Tragschiene integrierte Stromschienen zugeführt werden. Unter dem als Förderwagen arbeitenden Elektrohängebahnfahrzeug ist quer zur Fahrtrichtung eine Rollenbahn mit einer Vielzahl von Trag- und Führungsrollen montiert. Diese Rollenbahnen tragen einen Schlitten, an dem die zu transportierenden Güter angehängt werden. Oberhalb der Rollenbahnen ist ein motorisch antreibbarer Zahnriemen angeordnet, der mit beweglichen Nocken am Schlitten zusammenwirkt und so das Abschieben des Schlittens, das Wiederaufnehmen desselben und dessen Fixierung während des Transports ermöglicht.

Auch die zugehörigen Speicherstrecken sind als Rollenbahnen ausgebildet und mit motorisch angetriebenen Zahnriemen ausgerüstet. Steuernocken an den Stirnseiten der Schlitten beeinflussen die beweglichen Nocken an der Oberseite der Schlitten derart, daß sich die Schlitten auf der Speicherstrecke selbsttätig stauen.

Wie die DE-A 3 513 535 zeigt, sind auf den Speicherstrecken drei individuell angetriebene Zahnriemenantriebe erforderlich.

Aus der DE-C 2 609 371 ist eine Kupplungseinrichtung für einen Schleppkreisförderer bekannt. In einem an der Schleppkette befestigten Gehäuse ist ein Mitnehmerfinger schwenkbar gelagert, der durch einen Sperrhebel in seiner Position fixiert wird. In Laufrichtung vor dem Mitnehmerfinger ist ein Auslösehebel vorgesehen, der beim Auflaufen auf einen Nocken den Sperrhebel verschwenkt und dadurch den Mitnehmerfinger freigibt. Die Gegenstücke an den Laufwagen sind als feste Nocken ausgebildet, wobei an jedem Laufwagen Nocken unterschiedlicher Länge vorgesehen sind. Die kürzeren Nocken befinden sich in Laufrichtung gesehen an der Vorderseite der Laufwagen, die längeren Nocken hinten. Die kürzeren Nocken ermöglichen das Einkuppeln und damit den Transport der Laufwagen, die längeren Nocken bewirken das Auskuppeln, beispielsweise an einer Entnahmestelle oder für den Stauvorgang. Als Nocken an den Laufwagen dienen üblicherweise entsprechende Kappen, die die Laufrollen abdecken.

Der vorliegenden Erfindung liegt die Aufgabe zugrunde, die Vorrichtung der eingangs genannten Art derart weiterzubilden, daß beliebige Transportsysteme als Förderwagen und ebenso beliebige andere Transportsysteme als Förderguttträger eingesetzt werden können, und daß der mechanischkonstruktive Aufwand vereinfacht werden kann.

Diese Aufgabe wird gelöst durch die kennzeichnenden Merkmale des Patentanspruchs 1.

Damit ergeben sich die Vorteile, daß die Zahl der Rollen und Lagerstellen erheblich reduziert werden kann entsprechend der Zahl der Fahrwerke der Förderguttträger, wobei es möglich ist, auch herkömmliche Laufwagen, beispielsweise aus herkömmlichen Schleppkreisförderern, Handschiebebahnen und dergleichen, einzusetzen, daß an den Förderguttträgern nur unbewegliche Nocken vorgesehen sind, so daß bei den Mitnehmern auf die bewährte Konstruktion aus den Schleppkreisförderanlagen zurückgegriffen werden kann, wobei jedoch durch zusätzliche Maßnahmen erreicht wird, daß diese Mitnehmer auch mit den Nocken, die normalerweise nur das Entkoppeln während des Stauvorgangs bewirken, zusammenarbeiten, um den zu entnehmenden Förderguttträger auf den Förderwagen zu schieben, ohne dan es dazu eines besonderen Antriebs bedarf.

Eine bevorzugte Weiterbildung der Erfindung gemäß Anspruch 2 erlaubt es, insbesondere in Verbindung mit der Ausgestaltung nach Anspruch 3 bzw. 4, die Tragschienen unter dem Förderwagen immer exakt auf die Schienen der Speicherstrecke zu positionieren, auch wenn die Positioniergenauigkeit des Förderwagens selbst nicht ausreichend ist. Von besonderem Vorteil ist diese Ausgestaltung nach Anspruch 2 insbesondere bei Elektrohängebahnen, bei denen der Antriebsmotor im Stillstand das Fahrwerk bremst bzw. blockiert.

Die Ausgestaltung der Erfindung gemäß Anspruch 5 verbindet Einfachheit der Konstruktion mit störungsfreier Funktion. Die Klinken sind paarweise angeordnet; dadurch funktionieren sie in beiden Arbeitsrichtungen des ersten Antriebs und ermöglichen das Fixieren der Förderguttträger unter dem Förderwagen.

Die Ausgestaltung der Erfindung nach Anspruch 6 greift auf bewährte Konstruktionen zurück, die einen einwandfreien Transport und störungsfreien Stauvorgang erlauben.

Die Ausgestaltung der Erfindung nach Anspruch 7, insbesondere in Verbindung mit Anspruch 8, stellt eine Erweiterung der Mitnehmerkonstruktionen der herkömmlichen Schleppkreisförderanlagen dar. Diese Erweiterung dient dazu, die zweiten Nocken, die üblicherweise das Auskuppeln der Mitnehmer während des Stauvorgangs bewirken, ebenfalls als Antriebsnocken einsetzen zu können. Da diese Nocken sich im hinteren Teil des Förderguttträgers befinden, können die Laufwagen mit Hilfe des zweiten Antriebs und ohne Verwendung eines besonderen dritten Antriebs von den Speicherstrecken auf die Laufwagen aufgeschoben werden. Die im Bereich der Speicherstrecke vorgesehenen Vorrichtungen zum Steuern der zweiten, im hinteren Teil befindlichen, verlängerten Mitnehmer sorgen dafür, daß die Kopplung mit den hinteren Nocken nur dann stattfinden kann, wenn das Abschieben des Förderguttträgers auf den Förderwagen gewünscht ist.

Eine konstruktiv einfache Ausgestaltung dieser Steuervorrichtungen ist Gegenstand des Anspruchs 9.

Eine Ausgestaltung der Erfindung nach Anspruch 10 hat besondere Vorteile. Zunächst ist die Konstruktion platzsparend und die bewegten Massen sind klein. Außerdem ist es möglich, nur im Bereich der Entnahmeseite der Speicherstrecken eine Mitnehmerkupplung vorzusehen, die mit den langen Nocken an den Fördergutträgern zusammenwirken kann, so daß die als Steuervorrichtung dienenden schwenkbaren Klappen auch nur hier vorgesehen sein müssen.

Anhand der Zeichnung soll die Erfindung in Form eines Ausführungsbeispiels näher erläutert werden. Es zeigen:

Fig. 1 eine Seitenansicht von Förder- und Speicherstrecke mit Förderwagen und Fördergutträgern in schematisierter Darstellung,

Fig. 2 eine Draufsicht auf die Anlage der Fig. 1 und

Fig. 3 einen Förderwagen mit Fördergutträger und Fördergut in perspektivischer Darstellung.

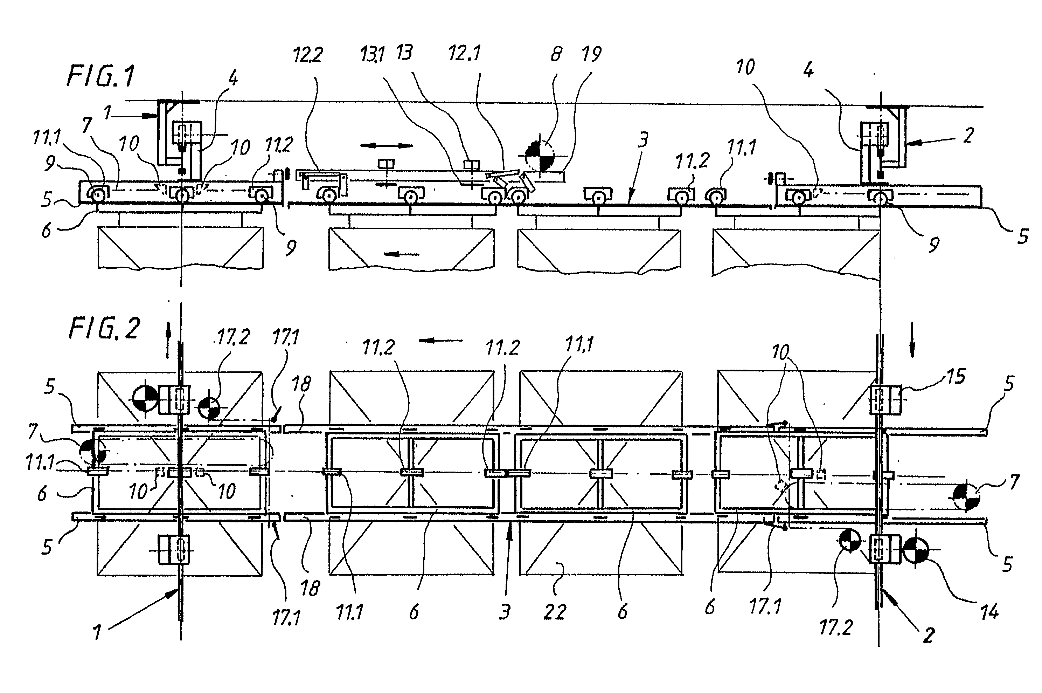

Die Fig. 1 und 2 zeigen einen Ausschnitt aus einem Förder- und Speichersystem unter Verwendung von Elektrohängebahnen. Zwischen zwei Förderstrecken 1,2 und quer dazu verlaufend ist eine Speicherstrecke 3 zu erkennen. Auf den Förderstrecken 1,2 laufen mit einem eigenen Elektroantrieb ausgerüstete Förderwagen 4. Grundsätzlich können jedoch alle anderen Arten von Hängebahnen, beispielsweise Schleppkreisförderer, Handschiebebahnen usw. eingesetzt werden.

Unter den Förderwagen 4 sind quer zur Förderrichtung Tragschienen 5 angeordnet. Auf diesen laufen mit Hilfe ihrer integrierten Rollenlaufwerke 9 die eigentlichen Fördergutträger 6. An diesen hängen dann die zu transportierenden Gegenstände 20, beispielsweise unter Verwendung von besonderen Paletten, Palettenwagen und dergleichen.

An den Förderwagen 4 ist ferner ein erster Antrieb 7 vorgesehen, beispielsweise in Form einer motorisch antreibbaren endlosen Kette, an der erste Mitnehmer 10 befestigt sind, vorzugsweise in Form von Klinken, die nur durch ihr Gewicht wirken, wie es prinzipiell aus der DE-C 2 609 371 bekannt ist. An den Fördergutträgern 6 sind feste Nocken 11 vorgesehen, wobei es sich empfiehlt, diese Nocken 11 im Bereich der Rollenlaufwerke 9 anzuordnen, wie es bei Schleppkreisförderern grundsätzlich bekannt ist. Die ersten Mitnehmer 10 am ersten Antrieb 7 kuppeln selbsttätig mit einem der Nocken 11.2. Beim Stillstand des ersten Antriebs 7 wird der Fördergutträger 6 auf den Tragschienen 5 fixiert, so daß ein gefahrloser Transport der Gegenstände 20 auf den Förderstrecken 1, 2 möglich ist. Bei sich drehendem ersten Antrieb 7 wird der Fördergutträger 6 je nach Drehrichtung entweder vom Förderwagen 4 auf die Speicherstrecke 3 oder in umgekehrter Richtung von der Speicherstrecke 3 auf den Förderwagen 4 geschoben.

Da die Positioniergenauigkeit der Förderwagen 4 zu den Speicherstrecken 3 bei den meisten Hängebahnsystemen nicht ausreicht, um ein störungsfreies Abschieben der Fördergutträger 6 zu erlauben, ist an den Tragschienen 5 des Förderwagens 4 eine Zentriervorrichtung 17 vorgesehen, und zwar in Form von Schwenkhebeln 17.1 an den Enden der Tragschienen 5, die von einem Schwenkantrieb 17.2 betätigt werden. Die Schwenkhebel 17.1 legen sich an die Schienen 18 der Speicherstrecke 3 an, so daß die Tragschienen 5 und die Schienen 18 der Speicherstrecke 3 miteinander fluchten.

Die Nocken 11 an den Fördergutträgern 6 sind von unterschiedlicher Art. Die in Laufrichtung vorne angebrachten Nocken 11.1 sind kürzer als die weiter hinten angebrachten Nocken 11.2. Am zweiten Antrieb 8 sind entsprechend unterschiedliche Mitnehmer 12.1, 12.2 vorgesehen. Die kürzeren Mitnehmer 12.1 kuppeln nur mit den kürzeren Nocken 11.1, nicht mit den längeren Nocken 11.2. Die längeren Mitnehmer 12.2 dagegen kuppeln sowohl mit den kürzeren Nocken 11.1 als auch mit den längeren Nocken 11.2. Beide Mitnehmer 12.1, 12.2 sind jedoch von der Funktion her darauf eingerichtet, ein Stauen der verschiedenen Fördergutträger 6 auf der Speicherstrecke 3 zu ermöglichen. Die Möglichkeit, auch mit den hinteren Nocken 11.2 zu koppeln, erlaubt es, ohne Verwendung eines Hilfsantriebs nur mit Hilfe des zweiten Antriebs 8 den auf der Speicherstrecke 3 vordersten Fördergutträger 6 so weit auf den Förderwagen 4 zu schieben, daß die ersten Mitnehmer 10 des ersten Antriebs 7 einen der Nocken 11 erfassen können und den Fördergutträger 6 ganz auf den Förderwagen 4 ziehen können.

Konstruktion und Funktion der im vorliegenden Ausführungsbeispiel beschriebenen Mitnehmer 12.1, 12.2 sind in der DE-C 2 609 371 ausführlich erläutert. Andere Mitnehmer sind jedoch ebenso verwendbar.

Um zu verhindern, daß die zweiten Mitnehmer 12.1, 12.2 den auf der Entnahmeseite der Speicherstrecke 3 stehenden Fördergutträger 6 ungewollt abschieben können, sind oberhalb der Nocken 11.1, 11.2 von einer Steuereinrichtung 13 betätigte schwenkbare Klappen 13.1 angeordnet, die in den Laufweg der zweiten Mitnehmer 12.1, 12.2 eingeschwenkt werden und deren Auslösehebel so betätigen, daß die Mitnehmer 12.1, 12.2 nicht einkuppeln können. Sobald sich ein leerer Förderwagen 4 vor der Entnahmeseite der Speicherstrecke 3 befindet, werden diese Schwenkklappen 13.1 ausgeschwenkt, der längere der zweiten Mitnehmer 12.2 koppelt mit dem längeren Nocken 11.2 und schiebt den Fördergutträger 6 auf den Förderwagen 4.

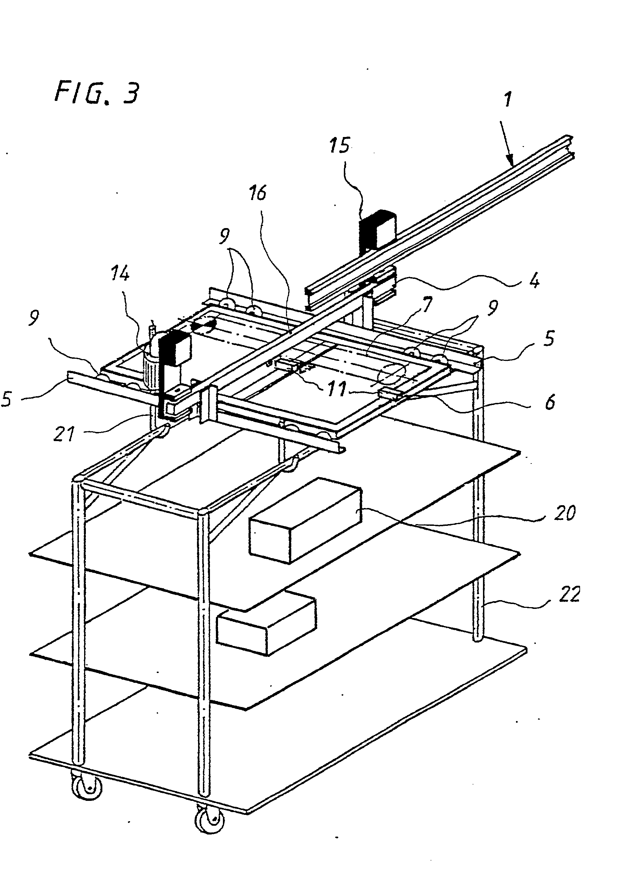

Fig. 3 zeigt nochmals in einer perspektivischen Darstellung die Förder- und Speichervorrichtung. Man erkennt die Förderstrecke 1 bzw. deren Tragschiene, auf der der Förderwagen 4 läuft. Der Förderwagen 4 besitzt ein mittels Elektromotor angetriebenes Fahrwerk 14 und ein nachlaufendes Laufwerk 15, die über eine Traverse 16 verbunden sind. Fahrwerk 14 und Traverse 16 sind gegeneinander um eine bestimmte Strecke längsverschieblich. Dies erleichtert das oben beschriebene Zentrieren der Tragschienen 5 auf die Schienen 18 der Speicherstrecke 3.

Unter der Traverse 16 sind zwei Tragschienen 5 in Form von Winkelschienen montiert. Der gegenseitige Abstand der Tragschienen 5 ist in diesem Beispiel sehr groß gewählt, um eine ausreichende Stabilität zu bekommen.

Auf den Tragschienen 5 befindet sich der Fördergutträger 6 mit vier doppelten Rollenlaufwerken 9. Auf der Oberseite des Fördergutträgers 6 erkennt man die Nocken 11. Ferner ist der erste Antrieb 7 zu erkennen.

Unter dem Fördergutträger 6 hängt an vier kräftigen Haken 21 ein Palettenwagen 22, auf dessen Paletten die zu fördernden und/oder zu speichernden Gegenstände 20 liegen.

Während bei dem in Fig. 3 dargestellten Beispiel zwei Tragschienen 5 mit großem gegenseitigem Abstand verwendet wurden, um das unerwünschte Pendeln des Palettenwagens 22 sicher zu verhindern, lassen sich grundsätzlich auch andere Anordnungen von Tragschienen und Förderguttträgern verwenden. Grundsätzlich ist es möglich, alle bekannten Hängebahnsysteme einzusetzen. Es ist auf diese Weise also möglich, die zu transportierenden Gegenstände 20 beispielsweise zwischen einem Elektrohängebahnsystem und einem Schleppkreisfördersystem oder einer Handschiebebahn umzusetzen. In allen Fällen werden die teuren, beispielsweise selbstfahrenden Elektrohängebahnfahrzeuge in geringer Stückzahl nur für die eigentlichen Transportaufgaben benötigt, während die preiswerten, rein passiven Fördergutträger in großer Stückzahl hauptsächlich für Speicherzwecke, für die Arbeitsplatzbeschickung und dergleichen eingesetzt werden.

**Patentansprüche**

1. Vorrichtung zum Fördern und Speichern von Gegenständen (20) auf Förderstrecken (1, 2) und quer dazu verlaufenden Speicherstrecken (3), wobei auf den Förderstrecken (1, 2) Förderwagen (4) laufen, unter denen quer zur Förderrichtung Tragschienen (5) angeordnet sind, auf denen ein Förderutträger (6) verschiebbar und fixierbar aufgenommen ist, wobei mittels eines ersten Antriebes (7) am Förderwagen (4) der Förderutträger (6) vom Förderwagen (4) seitlich auf die Speicherstrecken (3) und mittels eines zweiten Antriebes (8) auf der Speicherstrecke (3) transportierbar und von der Speicherstrecke (3) auf den Förderwagen (4) schiebbar ist, dadurch gekennzeichnet, daß der Förderutträger (6) Rollenlaufwerke (9) besitzt, daß der erste Antrieb (7) erste Mitnehmer (10) besitzt, daß am Förderutträger (6) Nocken (11) vorgesehen sind, wobei die ersten Mitnehmer (10) und die Nocken (11) aneinander angepaßt und in beiden Richtungen funktionsfähig sind, daß der zweite Antrieb (8) zweite Mitnehmer (12.1, 12.2) besitzt, die mit den gleichen Nocken (11) zusammenwirken, die Förderutträger (6) bewegen und ein Stauen der Förderutträger (6) ermöglichen, und daß auf der Entnahmeseite der Speicherstrecken (3) Vorrichtungen (13) vorgesehen sind, die die zweiten Mitnehmer (12.1, 12.2) steuern, so daß sie den Förderutträger (6) entweder auf den Förderwagen (4) abschieben oder nicht.

2. Vorrichtung nach Anspruch 1, dadurch gekennzeichnet, daß der Förderwagen (4) ein Fahrwerk (14) und ein Laufwerk (15) besitzt, die über eine Traverse (16) verbunden sind und daß das Fahrwerk (14) in der Traverse (16) längsverschieblich ist.

3. Vorrichtung nach Anspruch 1 oder 2, dadurch gekennzeichnet, daß an dem Förderwagen (4) eine Zentriervorrichtung (17) vorgesehen ist, die die Tragschienen (5) auf die Schienen (18) der Speicherstrecken (3) ausrichtet.

4. Vorrichtung nach Anspruch 3, dadurch gekennzeichnet, daß die Zentriervorrichtung (17) Schwenkhebel (17.1) besitzt, die an den Tragschienen (5) gelagert sind und sich an die Schienen (18) der Speicherstrecken (3) anlegen.

5. Vorrichtung nach wenigstens einem der Ansprüche 1 bis 4, dadurch gekennzeichnet, daß die ersten Mitnehmer (10) als Klinken ausgebildet sind, die durch ihr Gewicht wirken.

6. Vorrichtung nach wenigstens einem der Ansprüche 1 bis 5, dadurch gekennzeichnet, daß die zweiten Mitnehmer (12.1, 12.2) einen durch einen Sperrhebel fixierbaren und durch einen Auslösehebel lösbaren Mitnehmerfinger besitzen und daß der Mitnehmerfinger an einem Nocken (11.1) angreift, der am Förderutträger (6) in Laufrichtung vorn angeordnet ist.

7. Vorrichtung nach Anspruch 6, dadurch gekennzeichnet, daß am Förderutträger (6) zwei unterschiedliche Arten von Nocken (11.1, 11.2) und am zweiten Antrieb (8) entsprechend unterschiedliche Mitnehmer (12.1, 12.2) verschiedener Länge vorgesehen sind.

8. Vorrichtung nach Anspruch 7, dadurch gekennzeichnet, daß die Nocken (11.1, 11.2) unterschiedliche Längen besitzen und daß der längere Nocken (11.2) im hinteren Teil des Förderutträgers (6) sitzt.

9. Vorrichtung nach Anspruch 6, 7 oder 8, dadurch gekennzeichnet, daß die Vorrichtungen (13) an der Entnahmeseite der Speicherstrecken (3) schwenkbare Klappen (13.1) besitzen, die den Auslösehebel betätigen.

10. Vorrichtung nach wenigstens einem der Ansprüche 1 bis 9, dadurch gekennzeichnet, daß der zweite Antrieb (8) eine oszillierende Schubstange (19) aufweist, an der die zweiten Mitnehmer (12.1, 12.2) befestigt sind.

11. Vorrichtung nach wenigstens einem der Ansprüche 1 bis 10, dadurch gekennzeichnet, daß der Förderwagen (4) Bestandteil einer Hängebahn ist.

**Claims**

1. A device for conveying and storing objects (20) on conveying tracks (1, 2) and storage tracks (3) extending transversely thereto, where conveyor wagons run on the conveying tracks (1, 2), beneath which conveyor wagons (4) are arranged bearing rails (5) which extend transversely to the conveying direction and on which a conveyed goods carrier (6) is accommodated in such manner that it can be displaced and fixed, where, by means of a first drive device (7) on the conveyor wagon (4) the conveyed goods carrier (6) can be transported from the conveyor wagon (4) laterally towards the storage tracks (3) and by means of a second drive device (8) can be transported on the storage track (3) and displaced from the storage track (3) onto the conveyor wagon (4), characterised in that the conveyed goods carrier (6) comprises roller gear (9), that the first drive device (7) comprises first engaging members (10), that the conveyed goods carrier (6) is equipped with protrusions (11), where the first engaging members (10) and the protrusions (11) are adapted to one another and are capable of functioning in both directions, that the second drive device (8) comprises second engaging members (12.1, 12.2) which cooperate with the same protrusions (11), move the conveyed goods carriers (6) and facilitate the queuing of the conveyed goods carriers (6), and that on the withdrawal side of the storage tracks (3) devices (13) are provided which control the second engaging members (12.1, 12.2) in such manner that they either transfer the conveyed goods carrier (6) onto the conveyor wagon (4) or not.

2. A device as claimed in claim 1, characterised in that the conveyor wagon (4) comprises a driving unit (14) and a running unit (15) which are connected via a cross-bar (16), and that the driving unit (14) is longitudinally displaceable in the cross-bar (16).

3. A device as claimed in claim 1 or 2, characterised in that on the conveyor wagon (4) is arranged a centering device (17) which aligns the bearing rails (5) with the rails (18) of the storage tracks (3).

4. A device as claimed in claim 3, characterised in that the centering device (17) comprises pivot levers (17.1) which are mounted on the bearing rails (5) and which abut against the rails (18) of the storage tracks (3).

5. A device as claimed in at least one of claims 1 to 4, characterised in that the first engaging members (10) are in the form of latches which operate by virtue of their own weight.

6. A device as claimed in at least one of claims 1 to 5, characterised in that the second engaging members (12.1, 12.2) comprise an engaging finger fixed by a locking lever and released by a release lever and that the engaging finger acts on a protrusion (11.1) which is arranged at the front of the conveyed goods carrier (6) in the running direction.

7. A device as claimed in claim 6, characterised in that two different types of protrusions (11.1, 11.2) are arranged on the conveyed goods carrier (6) and correspondingly different engaging members (12.1, 12.2) of different lengths are arranged on the second drive device (8).

8. A device as claimed in claim 7, characterised in that the protrusions (11.1, 11.2) are of different lengths and that the longer protrusion (11.2) is located in the rear part of the conveyed goods carrier (6).

9. A device as claimed in claims 6, 7 or 8, characterised in that the devices (13) on the withdrawal side of the storage tracks (3) comprise swivelling flaps (13.1) which actuate the release lever.

10. A device as claimed in at least one of claims 1 to 9, characterised in that the second drive device (8) comprises an oscillating push rod (19) to which the second engaging members (12.1, 12.2) are attached.

11. A device as claimed in at least one of claims 1 to 10, characterised in that the conveyor wagon (4) is part of a trolley conveyor.

## Revendications

1. Dispositif pour transporter et stocker des objets (20) sur des voies de transport (1, 2) et des voies de stockage (3) s'étendant perpendiculairement aux voies de transport, dans lequel des chariots de transport (4) se déplacent sur les voies de transport (1, 2), sous lesquels des rails porteurs (5) sont disposés perpendiculairement au sens de transport, rails sur lesquels un porte-marchandises (6) est reçu avec possibilité de coulissement et de blocage en position, le porte-marchandises (6) pouvant être transporté latéralement depuis le chariot de transport (4) sur les voies de stockage (3) à l'aide d'un premier entraînement (7) prévu sur le chariot de transport (4), et être transporté sur la voie de stockage (3) et poussé de la voie de stockage (3) sur le chariot de transport (4) au moyen d'un second entraînement (8), caractérisé en ce que le porte-marchandises (6) possède des mécanismes de roulement à rouleaux (9), en ce que le premier entraînement (7) possède des premiers entraîneurs (10), en ce que des cames (11) sont prévues sur le porte-marchandises (6), les premiers entraîneurs (10) et les cames (11) étant mutuellement adaptés et opérationnels dans les deux directions, en ce que le second entraînement (8) possède des seconds entraîneurs (12.1, 12.2) qui coopèrent avec les mêmes cames (11), déplacent les porte-marchandises (6) et permettent l'accumulation des porte-marchandises (6), et en ce que des dispositifs (13) sont prévus du côté d'enlèvement des voies de stockage (3), lesquels commandent les seconds entraîneurs (12.1, 12.2) de façon qu'ils refoulent ou non le porte-marchandises (6) sur le chariot de transport (4).

2. Dispositif selon la revendication 1, caractérisé en ce que le chariot de transport (4) possède un mécanisme de déplacement (14) et un mécanisme de roulement (15) qui sont reliés par l'intermédiaire d'une traverse (16), et en ce que le mécanisme de déplacement (14) peut coulisser longitudinalement dans la traverse (16).

3. Dispositif selon la revendication 1 ou 2, caractérisé en ce qu'il est prévu sur le chariot de transport (4) un dispositif de centrage (17) qui aligne les rails porteurs (5) sur les rails (18) des voies de stockage (3).

4. Dispositif selon la revendication 3, caractérisé en ce que le dispositif de centrage (17) possède des leviers pivotants (17.1) qui sont montés sur les rails porteurs (5), et s'appliquent contre les rails (18) des voies de stockage (3).

5. Dispositif selon au moins une des revendications 1 à 4, caractérisé en ce que les premiers entraîneurs (10) sont réalisés sous forme de cliquets qui agissent par leur poids.

6. Dispositif selon au moins une des revendications 1 à 5, caractérisé en ce que les seconds entraîneurs (12.1, 12.2) possèdent un doigt entraîneur qui peut être bloqué en position par un levier de verrouillage et dégagé par un levier de dégagement, et en ce que le doigt entraîneur agit sur une came (11.1) qui est disposée, sur le porte-marchandises (6), à l'avant dans le sens d'avancement.

7. Dispositif selon la revendication 6, caractérisé en ce qu'il est prévu deux types différents de cames (11.1, 11.2) sur le porte-marchandises (6) et, d'une manière correspondante, des entraîneurs différents (12.1, 12.2), cle longueurs différentes, sur le second entraînement (8).

8. Dispositif selon la revendication 7, caractérisé en ce que les cames (11.1, 11.2) possèdent des longueurs différentes, et en ce que la came plus longue (11.2) se trouve dans la partie arrière du porte-marchandises (6).

9. Dispositif selon la revendication 6, 7 ou 8, caractérisé en ce que les dispositifs (13) prévus du côté d'enlèvement des voies de stockage (13.1) possèdent des volets pivotants (13.1) qui actionnenntlt le levier de dégagement.

10. Dispositif selon au moins une des revendications 1 à 9, caractérisé en ce que le second entraînement (8) présente une bielle oscillante (19), à laquelle sont fixés les seconds entraîneurs (12.1, 12.2).

11. Dispositif selon au moins une des revendications 1 à 10, caractérisé en ce que le chariot (4) fait partie d'un convoyeur à voie suspendue.

FIG.1

FIG.2

EP 0 288 730 B1

FIG. 3